# EUROPÄISCHE PATENTSCHRIFT

(11) **EP 3 407 471 B1**
(45) Veröffentlichungstag und Bekanntmachung des Hinweises auf die Patenterteilung: **21.07.2021**
(21) Anmeldenummer: 17172633.4
(22) Anmeldetag: 24.05.2017
(51) Int. Cl.: H02K 5/14, H02K 7/116, H02K 5/15

(54) **MOTOR-GETRIEBE-VERBINDUNGSANORDNUNG, INSBESONDERE ZUR VERWENDUNG IN FAHRZEUGEN**
MOTOR-TRANSMISSION CONNECTION ASSEMBLY, PARTICULARLY FOR USE IN MOTOR VEHICLES
DISPOSITIF DE CONNEXION ENTRE UNE TRANSMISSION ET UN MOTEUR, EN PARTICULIER DESTINÉ À ÊTRE UTILISÉ DANS DES VÉHICULES AUTOMOBILES

(43) Veröffentlichungstag der Anmeldung: 28.11.2018
(73) Patentinhaber: IMS Gear SE & Co. KGaA, 78166 Donaueschingen (DE)
(72) Erfinder: Fechler, Jens, 78183 Hüfingen (DE); Süß, Marius, 78176 Hondingen (DE); Synovzik, Wilfried, 78183 Hüfingen (DE)
(74) Vertreter: Westphal, Mussgnug & Partner Patentanwälte mbB

(56) Entgegenhaltungen:
- EP-A1- 1 101 967
- DE-A1- 10 138 749
- DE-A1-102014 212 135
- US-A1- 2016 134 073
- US-B1- 6 288 464
- US-B1- 6 459 188

## Beschreibung

Die vorliegende Erfindung betrifft eine Motor-Getriebe-Verbindungsanordnung, insbesondere zur Verwendung in Fahrzeugen.

Motor-Getriebe-Verbindungsanordnungen fassen einen Antriebsmotor, beispielsweise einen Elektromotor, und ein Getriebe zu einer Baueinheit zusammen. Die sich hieraus ergebende Baueinheit kann von einem Hersteller vormontiert werden, wodurch der Einbau in eine Vorrichtung, in welche die Baueinheit eingesetzt werden soll, vereinfacht werden kann. Eine besondere Ausgestaltung derartiger Vorrichtungen, wo Motor-Getriebe-Verbindungsanordnungen häufig verwendet werden, stellen Fahrzeuge dar. Im Zuge der Erhöhung des Komforts in Fahrzeugen werden immer mehr Bewegungen zwischen zwei Fahrzeugteilen, die in der Vergangenheit manuell von den Fahrzeuginsassen bewerkstelligt worden, von Motoren, insbesondere von Elektromotoren, ausgeführt. Wurden in älteren Fahrzeugen die Fensterscheiben und Schiebedächer durch Drehen einer Kurbel manuell geöffnet und geschlossen, werden hierzu heutzutage nahezu ausnahmslos elektromotorische Fensterheber eingesetzt. Mehr und mehr setzen sich elektrisch verstellbare Heckklappen durch, mit welchen die Heckklappen per Knopfdruck automatisch öffnen und schließen lassen. Weiterhin nimmt die Anzahl von Assistenz- und Sicherheitssystemen immer weiter zu, so dass der ohnehin schon begrenzte Bauraum im Fahrzeug immer knapper wird. Die Problematik des begrenzten Bauraums wird mit der fortschreitenden Elektrifizierung der Fahrzeuge weiter zunehmen, da die Akkus zum Speichern von elektrischer Energie eine vergleichsweise geringe Energiedichte aufweisen und daher viel Platz benötigen.

Bei der Verwendung von Elektromotoren umfasst die Motor-Getriebe-Verbindungsanordnung einen Motortopf zum Aufnehmen eines Elektromotors, einen Bürstenhalter zum Halten von Bürsten des Elektromotors, und ein Getriebegehäuse zum Aufnehmen eines Getriebes. Diese drei Komponenten müssen bei der Montage relativ zueinander ausgerichtet und miteinander verbunden werden. Üblicherweise wird der Bürstenhalter innerhalb des Motortopfes zentriert und das Getriebegehäuse über eine flanschartige Verbindung mit dem Motortopf verbunden. Die Verbindung des Getriebegehäuses mit dem Motortopf erfolgt über Schrauben, die durch Öffnungen, welche auf radial nach außen überstehenden Abschnitten des Motortopfes und des Getriebegehäuses angeordnet sind, durchgeführt werden. Aufgrund dieser nach außen überstehenden Abschnitte muss ein gewisser Bauraum freigehalten werden, welcher insbesondere in Fahrzeugen aus den eingangs genannten Gründen knapp ist.

Bei einer nicht ausreichend genauen Ausrichtung des Bürstenhalters und des Getriebegehäuses in Bezug auf den Motortopf tritt eine erhöhte Geräuschentwicklung im Betrieb einer Antriebsvorrichtung auf, welche eine derartige Motor-Getriebe-Verbindungsanordnung verwendet. Derartige Motor-Getriebe-Verbindungsanordnungen sind beispielsweise in der US 2016/134073 A1, der DE 101 38 749 A1, der DE 10 2014 212 135 A1, der EP 1 101 967 A1, der US 6 288 464 B1 und der US 6 459 188 B1 offenbart.

Aufgabe einer Ausführungsform der vorliegenden Erfindung ist es daher, eine Motor-Getriebe-Verbindungsanordnung zu schaffen, mit welcher Bauraum eingespart werden kann und welche einfach herzustellen und zu montieren ist. Zudem soll die Motor-Getriebe-Verbindungsanordnung eine möglichst genaue Ausrichtung des Motortopfs, des Bürstenhalters und des Getriebegehäuses zueinander ermöglichen.

Diese Aufgabe wird mit den in den Ansprüchen 1 und 6 angegebenen Merkmalen gelöst. Vorteilhafte Ausführungsformen sind Gegenstand der Unteransprüche.

Die Erfindung betrifft eine Motor-Getriebe-Verbindungsanordnung, insbesondere zur Verwendung in Fahrzeugen, umfassend einen Motortopf zum Aufnehmen eines Elektromotors, einen Bürstenhalter zum Halten von Bürsten des Elektromotors, und ein Getriebegehäuse zum Aufnehmen eines Getriebes, wobei der Motortopf, der Bürstenhalter und das Getriebegehäuse zum Verbinden ineinander einsteckbar sind. Der Motortopf weist eine Anzahl von Zentrierflächen auf, mit welchen der Motortopf sowohl mit dem Bürstenhalter als auch mit dem Getriebegehäuse in Kontakt tritt, wenn der Motortopf, der Bürstenhalter und das Getriebegehäuse ineinander eingesteckt sind, wodurch der Bürstenhalter und das Getriebegehäuse konzentrisch zum Motortopf ausgerichtet werden, wobei die Zentrierung des Bürstenhalters und des Getriebegehäuses ausschließlich über die Zentrierflächen des Motortopfes vorgenommen wird.

Die Anzahl der Zentrierflächen kann prinzipiell frei gewählt werden. Allerdings ist zu beachten, dass in jede der drei Raumachsen aufgrund von Fertigungstoleranzen nur jeweils ein Paar von Kontaktflächen und Gegenflächen pro Raumachse wirksam sein kann. Zudem ist eine statische Überbestimmung zu vermeiden, so dass zwischen zwei Kontaktflächenpaaren, die an sich miteinander in Kontakt treten könnten, absichtlich ein Spalt vorgesehen wird. Hierdurch können Formänderungen infolge von Temperaturschwankungen ausgeglichen werden, ohne dass Spannungen in die betreffenden Bauteile eingeleitet werden.

Die Zentrierung des Bürstenhalters und des Getriebegehäuses in Bezug auf den Motortopf wird ausschließlich über die Zentrierflächen vorgenommen, die keine Begrenzung der Bewegbarkeit entlang der Längsachse der Motor-Getriebe-Verbindungsanordnung bewirken, sondern die Bewegbarkeit des Bürstenhalters und des Getriebegehäuses senkrecht zur Längsachse begrenzen. Dadurch, dass die Zentrierung ausschließlich über die Zentrierflächen vorgenommen wird, wird ein Aufsummieren der Fertigungstoleranzen vermieden. Bei der eingangs beschriebenen aus dem Stand der Technik bekannten Motor-Getriebe-Verbindungsanordnung werden der Bürstenhalter und das Getriebegehäuse jeweils separat gegenüber dem Motortopf zentriert, so dass sich hier die Toleranzen addieren.

Aufgrund der vorschlagsgemäßen Zentrierflächen können der Bürstenhalter und das Getriebegehäuse auf einfache Weise sehr genau konzentrisch zum Motortopf angeordnet werden. Geräuschentwicklungen, welche durch eine unzureichende konzentrische Anordnung des Motortopfs, des Bürstenhalters und des Getriebegehäuses zueinander hervorgerufen werden, werden hierdurch vermieden, so dass die Antriebsvorrichtung, welche Gebrauch von der vorschlagsgemäßen Motor-Getriebe-Verbindungsanordnung macht, sehr leise betrieben werden kann.

Der Motortopf dient in dieser Ausführungsform als eine Aufnahme, in welche der Bürstenhalter und das Getriebegehäuse eingesteckt werden. Die Zentrierflächen verlaufen innerhalb des Motortopfes, so dass der Bürstenhalter und das Getriebegehäuse im eingesteckten Zustand mehr oder weniger weit in den Motortopf hineinragen, wobei der Bürstenhalter im eingesteckten Zustand auch komplett vom Motortopf umgeben sein kann. Hierdurch kann die Motor-Getriebe-Verbindungsanordnung kürzer gebaut werden, wodurch weiterer Bauraum in axialer Richtung eingespart werden kann. Aufgrund der Möglichkeit, dem Motortopf kürzer zu bauen, muss er auch nicht so weit tiefgezogen werden, was aus fertigungstechnischer Sicht eine Vereinfachung darstellt.

Die Modifikationen, die am Bürstenhalter gegenüber bekannten Varianten vorgenommen werden müssen, sind signifikant klein. Der Bürstenhalter muss nur so angepasst werden, dass die Kontaktflächen des Motortopfes tatsächlich auch einen Kontakt mit dem Bürstenhalter herstellen können. Der Aufwand zur Herstellung des im Spritzgussverfahren benötigten Werkzeugs unterscheidet sich nicht zu demjenigen, welches bislang verwendet wird. Der Unterschied liegt lediglich in der Kontur der Kavität. Selbiges gilt auch für das Getriebegehäuse. Der prinzipielle Aufbau des Bürstenhalters und des Getriebegehäuses muss nicht geändert werden. Die Bürstenhalter und das Getriebegehäuse können im Spritzgussverfahren hergestellt werden, so dass sich große Stückzahlen zu relativ geringen Kosten herstellen lassen.

Eine weitere Ausführungsform ist dadurch gekennzeichnet, dass der Motortopf erste Kontaktflächen, mit welchen der Motortopf mit dem Bürstenhalter in Kontakt tritt, und/oder zweite Kontaktflächen aufweist, mit welchen der Motortopf mit dem Getriebegehäuse in Kontakt tritt, wenn der Motortopf, der Bürstenhalter und das Getriebegehäuse ineinander eingesteckt sind. Die ersten und die zweiten Kontaktflächen können dabei so ausgestaltet sein, dass sie bezogen auf die Längsachse der Motor-Getriebe-Verbindungsanordnung als Anschlagsflächen wirken und die Bewegbarkeit der Bauteile relativ zueinander entlang der Längsachse begrenzen. Die ersten und/oder zweiten Kontaktflächen haben keine konzentrisch ausrichtende Wirkung des Bürstenhalters und des Getriebegehäuses in Bezug auf den Motortopf. Es bietet sich an, erste und zweite Gegenflächen im Getriebegehäuse vorzusehen, mit welchen die ersten und/oder zweiten Kontaktflächen in Kontakt treten, wenn der Motortopf, der Bürstenhalter und das Getriebegehäuse ineinander eingesteckt sind.

Nach Maßgabe einer weiteren Ausführungsform weist der Bürstenhalter dritte Kontaktflächen auf, mit welchen der Bürstenhalter mit dem Getriebegehäuse in Kontakt tritt, wenn der Motortopf, der Bürstenhalter und das Getriebegehäuse ineinander eingesteckt sind. Es bietet sich dabei an, die dritten Kontaktflächen mit Quetschrippen zu versehen, welche zum Spielausgleich der Motor-Getriebe-Verbindungsanordnung entlang der Längsachse dienen. Darüber hinaus bietet es sich an, dritte Gegenflächen im Getriebegehäuse vorzusehen, mit welchen die dritten Kontaktflächen in Kontakt treten, wenn der Motortopf, der Bürstenhalter und das Getriebegehäuse ineinander eingesteckt sind.

In dieser Ausführungsform wird das Getriebegehäuse gleichzeitig dazu verwendet, die Beweglichkeit des Bürstenhalters entlang der Längsachse der Motor-Getriebe-Verbindungsanordnung zu beschränken, so dass keine weiteren Maßnahmen hierzu getroffen werden müssen. Die Gestaltung und die Montage werden hierdurch vereinfacht.

Mit den vorschlagsgemäßen Zentrierflächen werden der Bürstenhalter und das Getriebegehäuse in Bezug auf den Motortopf eindeutig zentriert und konzentrisch zum Motortopf angeordnet, so dass keine weiteren Maßnahmen, beispielsweise die Verwendung von Positionierungsstiften oder dergleichen mehr notwendig ist. Weiterhin ist es insbesondere dann, wenn die Motor-Getriebe-Verbindungsanordnung die dritten Kontaktflächen aufweist, nicht mehr notwendig, gesonderte Befestigungsmaßnahmen zum Befestigen des Bürstenhalters innerhalb der Motor-Getriebe-Verbindungsanordnung vorzunehmen. Somit genügt es, den Motortopf und das Getriebegehäuse miteinander zu verbinden, da der Bürstenhalter bezogen auf die Längsachse einerseits am Motortopf und andererseits am Getriebegehäuse anliegt.

In einer weitergebildeten Ausführungsform können der Motortopf und/oder das Getriebegehäuse Crimpabschnitte zum Verbinden des Getriebegehäuses mit dem Motortopfes aufweisen.

Wie eingangs erwähnt, wird dies bei bekannten Motor-Getriebe-Verbindungsanordnung mittels einer Verschraubung unter Verwendung einer flanschartigen Verbindung umgesetzt. Die vorschlagsgemäße Motor-Getriebe-Verbindungsanordnung ermöglicht die Verwendung von Crimpabschnitten, die zum Verbinden des Motortopfes und des Getriebegehäuses mittels eines geeigneten Werkzeugs verformt werden. Hierdurch ist die flanschartige Verbindung nicht mehr notwendig, weshalb die Erstreckung der Motor-Getriebe-Verbindungsanordnung in radialer Richtung verringert und Bauraum eingespart werden kann.

Die Motor-Getriebe-Verbindungsanordnung weist Zentrierflächen auf, mit welchen das Getriebegehäuse sowohl mit dem Bürstenhalter als auch mit dem Motortopf in Kontakt tritt, wenn der Motortopf, der Bürstenhalter und das Getriebegehäuse ineinander eingesteckt sind, wodurch der Bürstenhalter und der Motortopf konzentrisch zum Getriebegehäuse ausgerichtet werden.

Eine Umsetzung der Erfindung betrifft ein Schiebedach in einem Fahrzeug, umfassend eine Motor-Getriebe-Verbindungsanordnung nach einem der vorherigen Ausführungsformen. Zudem betrifft eine Ausführung der Erfindung die Verwendung einer Motor-Getriebe-Verbindungsanordnung nach einem der vorherigen Ausführungsformen für Hilfsantriebe in Fahrzeugen, insbesondere in Kraftfahrzeugen. Unter Hilfsantrieben sind Antriebe zu verstehen, mit denen ein Fahrzeugteil relativ zu einem anderen Fahrzeugteil bewegt wird, beispielsweise bei Fensterhebern, Heckklappen und Sitzen. Hilfsantriebe sind aber nicht geeignet, das Fahrzeug selbst zu bewegen.

Eine Ausgestaltung der Erfindung betrifft ein Fahrzeug, insbesondere Kraftfahrzeug, umfassend Motor-Getriebe-Verbindungsanordnung nach einem der vorherigen Ausführungsformen. Die Vorteile und technischen Effekte, die sich mit einem derartigen Schiebedach, der Verwendung der Motor-Getriebe-Verbindungsanordnung und einem derartigen Fahrzeug realisieren lassen, entsprechen denjenigen, welche für die verschiedenen Ausführungsformen der Motor-Getriebe-Verbindungsanordnung beschrieben worden sind. Dadurch, dass die Zentrierung ausschließlich über die Zentrierflächen vorgenommen wird, wird ein Aufsummieren der Toleranzen vermieden. Weiterhin ist ein Vercrimpen zum Befestigen des Getriebegehäuses am Motortopf möglich, wohingegen im Stand der Technik eine Verschraubung notwendig ist. Hierdurch wird die Logistik vereinfacht, da die Vercrimpabschnitte direkt am Motortopf und/oder am Getriebegehäuse angeformt sind und daher keine separaten Verbindungselemente vorgehalten werden müssen. Für den Antrieb eines Schiebedachs steht insbesondere dann sehr wenig Bauraum zur Verfügung, wenn das Schiebedach als Panoramadach ausgestaltet ist. Insbesondere in diesem Fall kommt der reduzierte Bauraum der vorschlagsgemäßen Motor-Getriebe-Verbindungsanordnung besonders stark zur Geltung. Weiterhin lässt sich aufgrund der Möglichkeit, den Bürstenhalter und das Getriebegehäuse sehr präzise konzentrisch zum Motortopf anzuordnen, ein sehr geräuscharmer Betrieb der Antriebsvorrichtung realisieren, welche die vorschlagsgemäße Motor-Getriebe-Verbindungsanordnung verwendet.

Beispielhafte Ausführungsformen der Erfindung werden im Folgenden unter Bezugnahme auf die beigefügten Zeichnungen näher erläutert. Es zeigen
Figur 1a) eine erste perspektivische Explosionsdarstellung eines Ausführungsbeispiels einer vorschlagsgemäßen Motor-Getriebe-Verbindungsanordnung,
Figur 1b) eine zweite perspektivische Explosionsdarstellung der in Figur 1a) gezeigten Motor-Getriebe-Verbindungsanordnung,
Figur 2a) eine Seitenansicht der in Figur 1a) dargestellten Motor-Getriebe-Verbindungsanordnung im zusammengebauten Zustand,
Figur 2b) eine Schnittdarstellung entlang der in Figur 2a) definierten Schnittebene A-A, und
Figur 2c) eine Schnittdarstellung entlang der in Figur 2a) definierten Schnittebene B-B.

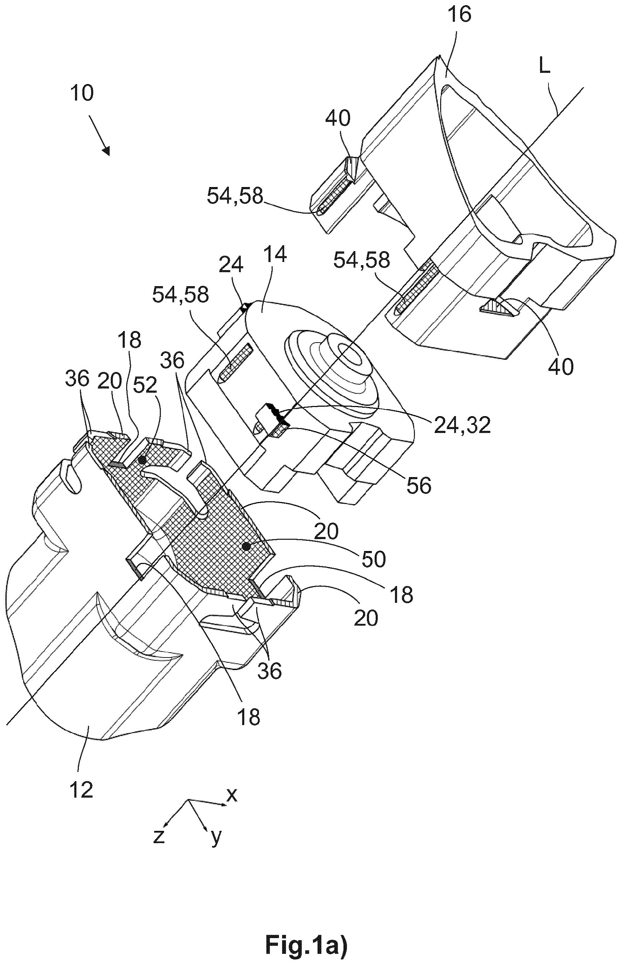

In den Figuren 1a) bis 2c) ist ein Ausführungsbeispiel einer erfindungsgemäßen Motor-Getriebe-Verbindungsanordnung 10 dargestellt. Die Motor-Getriebe-Verbindungsanordnung 10 umfasst einen Motortopf 12 zum Aufnehmen eines nicht dargestellten Elektromotors, einen Bürstenhalter 14, mit welchem nicht dargestellte Bürsten für den Elektromotor gehalten werden, und ein Getriebegehäuse 16 zum Aufnehmen eines ebenfalls nicht dargestellten Getriebes.

Der Motortopf 12 umfasst erste Kontaktflächen 18, mit denen der Motortopf 12 mit dem Bürstenhalter 14 in Kontakt tritt, wenn der Bürstenhalter 14 in den Motortopf 12 eingesteckt ist. Weiterhin weist der Motortopf 12 zweite Kontaktflächen 20 auf, mit denen der Motortopf 12 mit dem Getriebegehäuse 16 in Kontakt tritt, wenn das Getriebegehäuse 16 in den Motortopf 12 eingesteckt ist.

Zudem weist der Bürstenhalter 14 dritte Kontaktflächen 24 auf, mit denen der Bürstenhalter 14 mit dem Getriebegehäuse 16 in Kontakt tritt, wenn der Bürstenhalter 14 und das Getriebegehäuse 16 in den Motortopf 12 eingesteckt sind. Auf den dritten Kontaktflächen 24 sind Quetschrippen 32 angeordnet, auf die später noch genauer eingegangen wird.

Darüber hinaus umfasst der Motortopf 12 Zentrierflächen 50, welche in x-Richtung wirken, und Zentrierflächen 52, die in y-Richtung wirken, mit denen der Motortopf 12 sowohl mit dem Bürstenhalter 14 als auch mit dem Getriebegehäuse 16 in Kontakt tritt, wenn der Bürstenhalter 14 und das Getriebegehäuse 16 in den Motortopf 12 eingesteckt sind.

Der Bürstenhalter 14 und das Getriebegehäuse 16 weisen erste Gegenflächen 26, zweite Gegenflächen 28 und dritte Gegenflächen 30 auf, mit denen sie mit der oder den ersten, zweiten bzw. dritten Kontaktflächen 18, 20, 24 in Kontakt treten, wenn der Bürstenhalter 14 und das Getriebegehäuse 16 in den Motortopf 12 eingesteckt sind.

Zudem weisen der Bürstenhalter 14 und das Getriebegehäuse 16 Zentriergegenflächen 54, die bezogen auf das in den Figuren angegebene Koordinatensystem in x-Richtung wirken, und Zentriergegenflächen 56 auf, die in y-Richtung wirken. Folglich verlaufen die Zentriergegenflächen 54 parallel zu einer Längsachse L und liegen in der y-z-Ebene und bewirken bei Kontakt mit den Zentrierflächen 50 eine Zentrierung in die x-Richtung. Entsprechend verlaufen die Zentrierflächen 56 parallel zur Längsachse L und liegen in der x-z- Ebene. Sie bewirken bei Kontakt mit den Zentrierflächen 52 eine Zentrierung in y-Richtung bezogen auf das Koordinatensystem.

Im dargestellten Ausführungsbeispiel sind die Zentriergegenflächen 54 in x-Richtung als Erhöhungen 58 ausgestaltet oder auf Erhöhungen 58 angeordnet. Die Zentriergegenflächen 54 treten mit den Zentrierflächen 50 und die Zentriergegenflächen 56 mit den Zentrierflächen 52 in Kontakt, wenn der Bürstenhalter 14 und das Getriebegehäuse 16 in den Motortopf 12 eingesteckt sind.

Bei Betrachtung der Figuren 1a) und 1b) erkennt man, dass die ersten, zweiten und dritten Kontaktflächen 18, 20, 24 in einer senkrecht zur Längsachse L der Motor-Getriebe-Verbindungsanordnung 10 verlaufenden Ebene liegen. Bezogen auf das Koordinatensystem verlaufen sie in einer x-y-Ebene, wobei die Längsachse L parallel zur z-Achse des Koordinatensystems verläuft.

Auch die ersten, zweiten und dritten Gegenflächen 26, 28, 30 liegen in der senkrecht zur Längsachse L verlaufenden x-y-Ebene. Folglich wirken die ersten, zweiten und dritten Kontaktflächen 18, 20, 24 als Anschläge, welche die Bewegbarkeit des Motortopfes 12, des Bürstenhalters 14 und des Getriebegehäuses 16 relativ zueinander entlang der Längsachse L bzw. in z-Richtung begrenzen.

Darüber hinaus weist der Motortopf 12 insgesamt sechs Crimpabschnitte 36 auf, mit denen das Getriebegehäuse 16 am Motortopf 12 befestigt werden kann und wodurch der Bürstenhalter 14 zwischen dem Motortopf 12 und dem Getriebegehäuse 16 verspannt wird.

Zur Montage der Motor-Getriebe-Verbindungsanordnung 10 wird zunächst der Bürstenhalter 14 in den Motortopf 12 eingebracht, bis dass die ersten Gegenflächen 26 des Bürstenhalters 14 mit den ersten Kontaktflächen 18 des Motortopfes 12 in Kontakt treten. Dabei treten die Zentriergegenflächen 54 in x-Richtung und die Zentriergegenflächen 56 in y-Richtung des Bürstenhalters 14 in Kontakt mit den Zentrierflächen 50 in x-Richtung und den Zentrierflächen 52 in y-Richtung des Motortopfes 12, wodurch der Bürstenhalter 14 bezogen auf die Längsachse L konzentrisch zum Motortopf 12 ausgerichtet wird.

Anschließend wird das Getriebegehäuse 16 in den Motortopf 12 eingebracht, bis dass die zweiten Gegenflächen 28 mit den zweiten Kontaktflächen 20 des Motortopfes 12 und die dritten Gegenflächen 30 mit den dritten Kontaktflächen 24 des Bürstenhalters 14 in Kontakt treten. Hierbei treten die Zentriergegenflächen 54, 56 in x- und in y-Richtung des Getriebegehäuses 16 mit den Zentrierflächen 50, 52 in x- und in y-Richtung des Motortopfes 12 in Kontakt, so dass auch das Getriebegehäuse 16 bezogen auf die Längsachse L konzentrisch zum Motortopf 12 ausgerichtet wird. Folglich wirken die Zentrierflächen 50, 52 in x- und in y-Richtung und die Zentriergegenflächen 54, 56 in x- und in y-Richtung auch in Bezug auf das Getriebegehäuse 16 zentrierend.

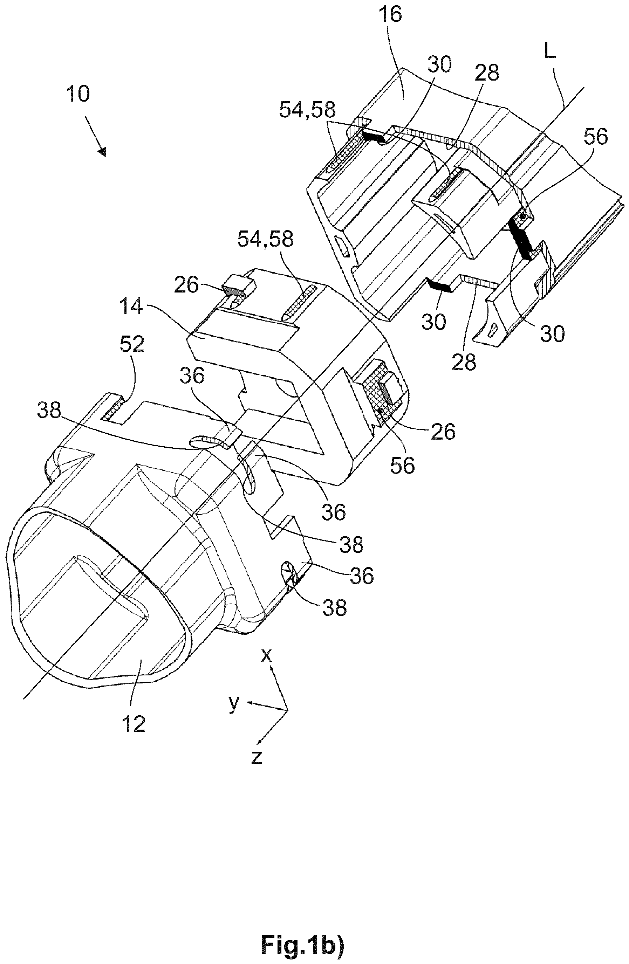

Insbesondere aus Figur 1a) ist zu entnehmen, dass der Motortopf 12 insgesamt drei erste Kontaktflächen 18 aufweist, die in einer Ausnehmung der im Querschnitt in etwa rechteckig verlaufenden Wandung des Motortopfes 12 angeordnet sind. Entsprechend weist der Bürstenhalter 14 drei erste Gegenflächen 26 auf, die auf Vorsprüngen des Bürstenhalters 14 angeordnet sind, welche in die Ausnehmungen des Motortopfes 12 eingreifen können. Auch das Getriebegehäuse 16 weist drei dritte Gegenflächen 30 auf, die in die Ausnehmungen des Motortopfes eingreifen können. Die Ausnehmungen sind so angeordnet, dass der Bürstenhalter 14 und das Getriebegehäuse 16 nur in einer Drehstellung in den Motortopf 12 eingebracht werden können. Um das Getriebegehäuse 16 am Motortopf 12 zu befestigen, werden die Crimpabschnitte 36 radial einwärts zur Längsachse L hin verbogen, so dass ein Formschluss zwischen dem Getriebegehäuse 16 und dem Motortopf 12 hergestellt wird. Die Crimpabschnitte 36 weisen Crimpflächen 38 (siehe Figur 1b)) auf, die in etwa in der x-y-Ebene liegen und mit Crimpgegenflächen 40 des Getriebegehäuses 16 (siehe Figur 1a)) in Kontakt treten. Die Crimpgegenflächen 40 verlaufen in etwa in der x-y-Ebene, ist aber etwas gegenüber der x-y-Ebene geneigt. Beim Vercrimpen bzw. beim Verbiegen der Crimpabschnitte 36 reiben die Crimpflächen 38 auf den Crimpgegenflächen 40, so dass zumindest anteilig auch ein Reibschluss bereitgestellt wird.

Da der Bürstenhalter 14 einerseits mit seinen ersten Gegenflächen 26 an den ersten Kontaktflächen 18 des Motortopfes 12 und andererseits mit seinen dritten Kontaktflächen 24 an den dritten Gegenflächen 30 des Getriebegehäuses 16 anliegt, ist seine Position innerhalb der Motor-Getriebe-Verbindungsanordnung 10 eindeutig festgelegt, sobald die Crimpabschnitte 36 verbogen worden sind. Aufgrund der Neigung der Crimpabschnitte 40 gegenüber der x-y-Ebene erfolgt eine finale Positionierung des Getriebegehäuses 16 und des Bürstenhalters 14 bezogen auf die Längsachse L. Die Quetschrippen 32 sind so ausgestaltet, dass sie beim Verbiegen der Crimpabschnitte 40 gestaucht werden, wodurch das Spiel der Motor-Getriebe-Verbindungsanordnung 10 entlang der Längsrichtung ausgeglichen wird.

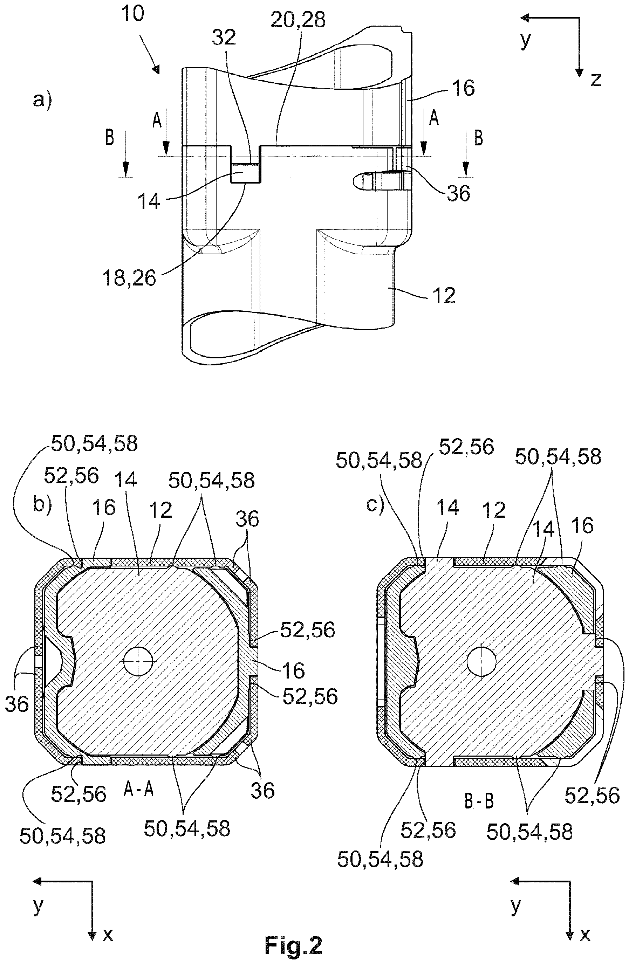

Die Figuren 2a) bis 2c) zeigen die Motor-Getriebe-Verbindungsanordnung 10 im zusammengebauten Zustand, wobei die Crimpabschnitte 36 noch nicht verbogen worden sind.

### Bezugszeichenliste

- 10: Motor-Getriebe-Verbindungsanordnung
- 12: Motortopf
- 14: Bürstenhalter
- 16: Getriebegehäuse
- 18: erste Kontaktflächen
- 20: zweite Kontaktflächen
- 24: dritte Kontaktflächen
- 26: erste Gegenflächen
- 28: zweite Gegenflächen
- 30: dritte Gegenflächen
- 32: Quetschrippen
- 36: Crimpabschnitt
- 38: Crimpflächen
- 40: Crimpgegenflächen

- 50: Zentrierflächen in x-Richtung
- 52: Zentrierflächen in y-Richtung
- 54: Zentriergegenflächen in x-Richtung
- 56: Zentriergegenflächen in y-Richtung
- 58: Erhöhungen

- L: Längsachse

## Patentansprüche

1. Motor-Getriebe-Verbindungsanordnung, insbesondere zur Verwendung in Fahrzeugen, umfassend
- einen Motortopf (12) zum Aufnehmen eines Elektromotors,
- einen Bürstenhalter (14) zum Halten von Bürsten des Elektromotors, und
- ein Getriebegehäuse (16) zum Aufnehmen eines Getriebes,
- wobei der Motortopf (12), der Bürstenhalter (14) und das Getriebegehäuse (16) zum Verbinden ineinander einsteckbar sind, und
- der Motortopf (12) eine Anzahl von Zentrierflächen (50,52) aufweist, mit welchen der Motortopf (12) sowohl mit dem Bürstenhalter (14) als auch mit dem Getriebegehäuse (16) in Kontakt tritt, wenn der Motortopf (12), der Bürstenhalter (14) und das Getriebegehäuse (16) ineinander eingesteckt sind,
so dass der Motortopf (12) mit dem Bürstenhalter (14) in Kontakt tritt, wenn der Bürstenhalter (14) in den Motortopf (12) eingesteckt ist,
der Motortopf (12) mit dem Getriebegehäuse (16) in Kontakt tritt, wenn das Getriebegehäuse (16) in den Motortopf (12) eingesteckt ist und
der Bürstenhalter (14) mit dem Getriebegehäuse (16) in Kontakt tritt, wenn der Bürstenhalter (14) und das Getriebegehäuse (16) in den Motortopf (12) eingesteckt sind,
wodurch der Bürstenhalter (14) und das Getriebegehäuse (16) konzentrisch zum Motortopf (12) ausgerichtet werden, wobei die Zentrierung des Bürstenhalters (14) und des Getriebegehäuses (16) ausschließlich über die Zentrierflächen (50, 52) des Motortopfes (12), mit welchen der Motortopf (12) sowohl mit dem Bürstenhalter (14) als auch mit dem Getriebegehäuse (16) in Kontakt tritt und das Getriebegehäuse (16) sowohl mit dem Bürstenhalter (14) als auch mit dem Motortopf (12) in Kontakt tritt, wenn der Motortopf (12), der Bürstenhalter (14) und das Getriebegehäuse (16) ineinander eingesteckt sind, vorgenommen wird.

2. Motor-Getriebe-Verbindungsanordnung nach Anspruch 1, **dadurch gekennzeichnet, dass** der Motortopf (12)
- erste Kontaktflächen (18), mit welchen der Motortopf (12) mit dem Bürstenhalter (14) in Kontakt tritt, und/oder
- zweite Kontaktflächen (20) aufweist, mit welchen der Motortopf (12) mit dem Getriebegehäuse (16) in Kontakt tritt, wenn der Motortopf (12), der Bürstenhalter (14) und das Getriebegehäuse (16) ineinander eingesteckt sind.

3. Motor-Getriebe-Verbindungsanordnung nach einem der Ansprüche 1 oder 2,
**dadurch gekennzeichnet, dass** der Bürstenhalter (14) dritte Kontaktflächen (24) aufweist, mit welchen der Bürstenhalter (14) mit dem Getriebegehäuse (16) in Kontakt tritt, wenn der Motortopf (12), der Bürstenhalter (14) und das Getriebegehäuse (16) ineinander eingesteckt sind.

4. Motor-Getriebe-Verbindungsanordnung nach einem der vorherigen Ansprüche,
**dadurch gekennzeichnet, dass** der Motortopf (12) und/oder das Getriebegehäuse (16) Crimpabschnitte (36) zum Verbinden des Getriebegehäuses (16) mit dem Motortopf (12) aufweisen.

5. Schiebedach in Fahrzeugen, umfassend Motor-Getriebe-Verbindungsanordnung (10) nach einem der vorherigen Ansprüche.

6. Verwendung einer Motor-Getriebe-Verbindungsanordnung (10) nach einem der Ansprüche 1 bis 3 in Hilfsantrieben in Fahrzeugen, insbesondere in Kraftfahrzeugen.

7. Fahrzeug, insbesondere Kraftfahrzeug, umfassend Motor-Getriebe-Verbindungsanordnung (10) nach einem der Ansprüche 1 bis 4.

## Claims

1. Motor-transmission connection arrangement, in particular for use in motor vehicles, comprising
- a motor pot (12) for receiving an electric motor,
- a brush holder (14) for holding brushes of the electric motor, and
- a transmission housing (16) for receiving a transmission,
- wherein the motor pot (12), the brush holder (14) and the transmission housing (16) can, for connection, be inserted into each other, and
- the motor pot (12) comprises numerous centering surfaces (50, 52), with which both the motor pot (12), as well as the brush holder (14) and the transmission housing (16) enter into contact when the motor pot (12), the brush holder (14) and the transmission housing (16) are inserted into each other such that the motor pot (12) enters into contact with the brush holder (14) when the brush holder (14) is inserted into the motor pot (12),
the motor pot (12) enters into contact with the transmission housing (16) when the transmission housing (16) is inserted into the motor pot (12), and
the brush holder (14) comes into contact with the transmission housing (16) when the brush holder (14) and the transmission housing (16) are inserted into the motor pot (12),
by means of which the brush holder (14) and the transmission housing (16) are concentrically aligned with the motor pot (12), wherein the centering of the brush holder (14) and of the transmission housing (16) is carried out exclusively by means of the centering surfaces (50, 52) of the motor pot (12) with which the motor pot (12) enters into contact both with the brush holder (14), as well as with the transmission housing (16) and the transmission housing (16) enters into contact with both the brush holder (14), as well as with the motor pot (12) when the motor pot (12), the brush holder (14) and the transmission housing (16) are inserted into each other.

2. Motor-transmission connection arrangement in accordance with claim 1, **characterized in that** the motor pot (12)
- comprises first contact surfaces (18) by means of which the motor pot (12) enters into contact with the brush holder (14), and/or
- second contact surfaces (20) by means of which the motor pot (12) enters into contact with the transmission housing (16) when the motor pot (12), the brush holder (14) and the transmission housing (16) are inserted into each other.

3. Motor-transmission connection arrangement in accordance with either of claims 1 or 2, **characterized in that** the brush holder (14) comprises third contact surfaces (24) by means of which the brush holder (14) enters into contact with the transmission housing (16) when the motor pot (12), the brush holder (14) and the transmission housing (16) are inserted into each other.

4. Motor-transmission connection arrangement in accordance with any of the preceding claims,
**characterized in that** the motor pot (12) and/or the transmission housing (16) comprises crimping segments (36) for connecting the transmission housing (16) to the motor pot (12).

5. Sliding roof in motor vehicles, comprising motor-transmission connection arrangement (10) in accordance with any of the preceding claims.

6. Use of a motor-transmission connection arrangement (10) in accordance with any of the claims 1 to 3 in vehicles, in particular in motor vehicles.

7. Vehicle, in particular a motor vehicle, including motor-transmission connection arrangement (10) in accordance with any of the claims 1 to 4.

## Revendications

1. Dispositif de connexion entre un moteur et une transmission, notamment destiné à des véhicules automobiles, comprenant :
- un pot de moteur (12) pour recevoir un moteur électrique,
- un support de balais (14) pour recevoir les balais du moteur électrique et,
- un boîtier de transmission (16) pour recevoir une transmission,
- le pot de moteur (12), le support de balais (14) et le boîtier de transmission (16) s'engageant les uns dans les autres pour réaliser la liaison et,
- le pot de moteur (12) comporte un certain nombre de surfaces de centrage (50, 52) par lesquelles le pot de moteur (12) vient en contact avec le support de balais (14) et aussi avec le boîtier de transmission (16) lorsque le pot de moteur (12), le support de balais (14) et le boîtier de transmission (16) sont engagés les uns dans les autres,
de façon que le pot de moteur (12) vienne en contact avec le support de balais (14) lorsque le support de balais (14) est engagé dans le pot de moteur (12),
- le pot de moteur (12) vient en contact avec le boîtier de transmission (16) lorsque le boîtier de transmission (16) est engagé dans le pot de moteur (12) et,
- le support de balais (14) vient en contact avec le boîtier de transmission (16) lorsque le support de balais (14) et le boîtier de transmission (16) sont engagés dans le pot de moteur (12),
de sorte que le support de balais (14) et le boîtier de transmission (16) sont orientés concentriquement par rapport au pot de moteur (12), le centrage de support de balais (14) et du boîtier de transmission (16) se faisant exclusivement par les surfaces de centrage (50, 52) du pot de moteur (12) par lesquelles le pot de moteur (12) vient en contact à la fois avec le support de balais (14) et avec le boîtier de transmission (16) et le boîtier de transmission (16) ainsi que le support de balais (14) et aussi avec le pot de moteur (12) viennent en contact lorsque le pot de moteur (12), le support de balais (14) et le boîtier de transmission (16) sont engagés l'un dans l'autre.

2. Dispositif de connexion d'un moteur et d'une transmission selon la revendication 1,
**caractérisé en ce que**
le pot de moteur (12)
- a une première surface de contact (18) par laquelle le pot de moteur (12) vient en contact avec le support de balais (14) et/ou,
- une seconde surface de contact (20) par laquelle le pot de moteur (12) vient en contact avec le boîtier de transmission (16) lorsque le pot de moteur (12), le support de balais (14) et le boîtier de transmission (16) sont engagés l'un dans l'autre.

3. Dispositif de connexion entre un moteur et une transmission selon la revendication 1 ou 2,
**caractérisé en ce que**
le support de balais (14) comporte des troisièmes surfaces de contact (24) par lesquelles le support de balais (14) vient en contact avec le boîtier de transmission (16) lorsque le pot de moteur (12), le support de balais (14) et le boîtier de transmission (16) sont engagés l'un dans l'autre.

4. Dispositif de connexion entre un moteur et une transmission selon l'une des revendications précédentes,
**caractérisé en ce que**
le pot de moteur (12) et/ou le boîtier de transmission (16) comportent des segments de sertissage (36) pour relier le boîtier de transmission (16) au pot de moteur (12).

5. Toit coulissant de véhicule automobile comprenant un dispositif de connexion entre un moteur et une transmission (10) selon l'une des revendications précédentes.

6. Application d'un dispositif de connexion entre un moteur et une transmission (10) selon l'une des revendications 1 à 3 dans des entraînements auxiliaires de véhicules automobiles, notamment dans des véhicules automobiles.

7. Véhicule, notamment véhicule automobile comportant un dispositif de connexion entre le moteur et une transmission (10) selon l'une des revendications 1 à 4.
